# EUROPÄISCHE PATENTSCHRIFT

(11) **EP 1 046 446 B1**
(45) Veröffentlichungstag und Bekanntmachung des Hinweises auf die Patenterteilung: **05.03.2003**
(21) Anmeldenummer: 00108392.2
(22) Anmeldetag: 17.04.2000
(51) Int. Cl.: B22D 19/00, B22D 17/24, B29C 45/14

(54) **Gussteil mit Gewindeloch sowie Vorrichtung und Verfahren zur seiner Herstellung**
Cast article with threaded hole and device and method for its fabrication
Pièce coulée comportant un trou fileté, ainsi que dispositif et procédé pour sa fabrication

(30) Priorität: 22.04.1999 DE 29907175 U
(43) Veröffentlichungstag der Anmeldung: 25.10.2000
(73) Patentinhaber: Ferco International Ferrures et Serrures de Bâtiment, 57445 Réding, Sarrebourg (FR)
(72) Erfinder: Lejeune, Jean-Marie, 57400 Sarrebourg (FR)
(74) Vertreter: Glawe, Delfs, Moll & Partner

(56) Entgegenhaltungen:
- US-A- 2 480 966
- US-A- 2 672 070
- US-A- 3 112 540
- US-A- 3 880 041
- US-A- 3 945 070

## Beschreibung

Die Erfindung betrifft ein Gußteil mit einem Gewindeloch. Unter Gußteil wird hierbei ein beliebiges, durch Gießen hergestelltes Werkstück verstanden, wobei der Begriff Gießen jedes übliche Gießverfahren, bei dem flüssiger Werkstoff in eine Gießform eingebracht wird und dort erstarrt, umfassen soll. Insbesondere gehören dazu auch Druckguß- und Spritzgußverfahren.

Bei der Herstellung von Gewindelöchern in Gußteilen ist die häufigste Vorgehensweise die, daß beim Gießen mittels eines zylindrischen Kernstiftes ein zylindrisches Loch geformt und in dieses dann nachträglich spanabhebend ein Gewinde eingeschnitten wird. Es ist auch bekannt, Gewindestifte als Kernstifte zu verwenden, so daß bereits beim Gießen ein Loch mit Innengewinde entsteht. Hierbei ist es aber sehr schwierig, hinreichend maßhaltig und sauber zu arbeiten und das Entstehen von Gießbärten zu vermeiden. In der Regel ist deshalb eine spanabhebende Nachbearbeitung zum Entfernen von Gießbärten, Graten und dergl. erforderlich. Dies gilt vor allem dann, wenn es sich nicht um ein Gewindesackloch, sondern um ein durchgehendes Gewindeloch handelt, so daß der verwendete Gewindekernstift an beiden Enden an der Formwandung anliegen muß. Bei komplex geformten Teilen ist diese Lösung daher nicht oder nur schwierig anwendbar. Auch erschwert das Schrumpfen des Gießwerkstoffes die Bildung eines sauberen und maßhaltigen Innengewindes, insbesondere, wenn es sich um Gußteile kleinerer Abmessungen handelt.

Verfahren wie in der Präambel des Anspruchs 1 angegeben, sind z.B. aus US-A-2480966, US-A-3112540 und US-A-3945070 bekannt. Bei diesem bekannten Verfahren bzw. den dabei verwendeten Vorrichtungen kann aber nicht mit Sicherheit verhindert werden, daß flüssiges Gießmaterial zwischen den Windungen der Drahtwendel sowie an den Enden der Drahtwendel zwischen dieser und der Gießform nach innen in den freien Querschnitt der Drahtwendel hinein vordringt. Hierdurch kann es in dem von der Drahtwendel umschlossenen Gewindeloch, insbesondere im Eingangsbereich desselben, zu Angüssen und Gießbärten kommen, die das Einschrauben einer Schraube in das Gewindeloch erschweren. Bei dem aus US-A-3945070 bekannten Gußteil sind die Enden der ersten und letzten Wicklung der Drahtwendel nach außen abgebogen und im Gußmaterial verankert, um die Drahtwendel gegen Rotation zu sichern. Auf das Einschrauben einer Schraube in das Gewindeloch hat dies keinen Einfluß.

Der Erfindung liegt die Aufgabe zugrunde, ein Verfahren an einer Vorrichtung zur Herstellung eines Gußteils mit Gewindeloch, sowie ein nach dem Verfahren hergestelltes Gußteil anzugeben, welche die Ausbildung eines sehr sauberen und maßhaltigen Innengewindes der Gewindebohrung allein durch den Gießprozeß in einem Arbeitsgang ohne jede spanabhebende Nachbehandlung ermöglicht, wobei insbesondere auch mindestens einer der Endbereiche der Gewindebohrung so gestaltet ist, daß das Einschrauben einer Schraube erleichtert ist.

Die Aufgabe der Erfindung gemäß durch das in Anspruch 1 gegebene Verfahren, die in Anspruch 4 angegebene Vorrichtung und das in Anspruch 7 angegebene Gußteil gelöst. Die abhängigen Ansprüche beziehen sich auf weitere vorteilhafte Merkmale der Erfindung.

Eine Ausführungsform der Erfindung wird anhand der Zeichnungen näher erläutert. Es zeigen:
- Fig. 1: einen Schnitt durch ein erfindungsgemäßes Gußteil;
- Fig. 2: einen Schnitt durch eine erfindungsgemäße Gießvorrichtung im Leerzustand;
- Fig. 3: einen Schnitt durch die Gießvorrichtung in dem für den Gießvorgang vorbereiteten Zustand.

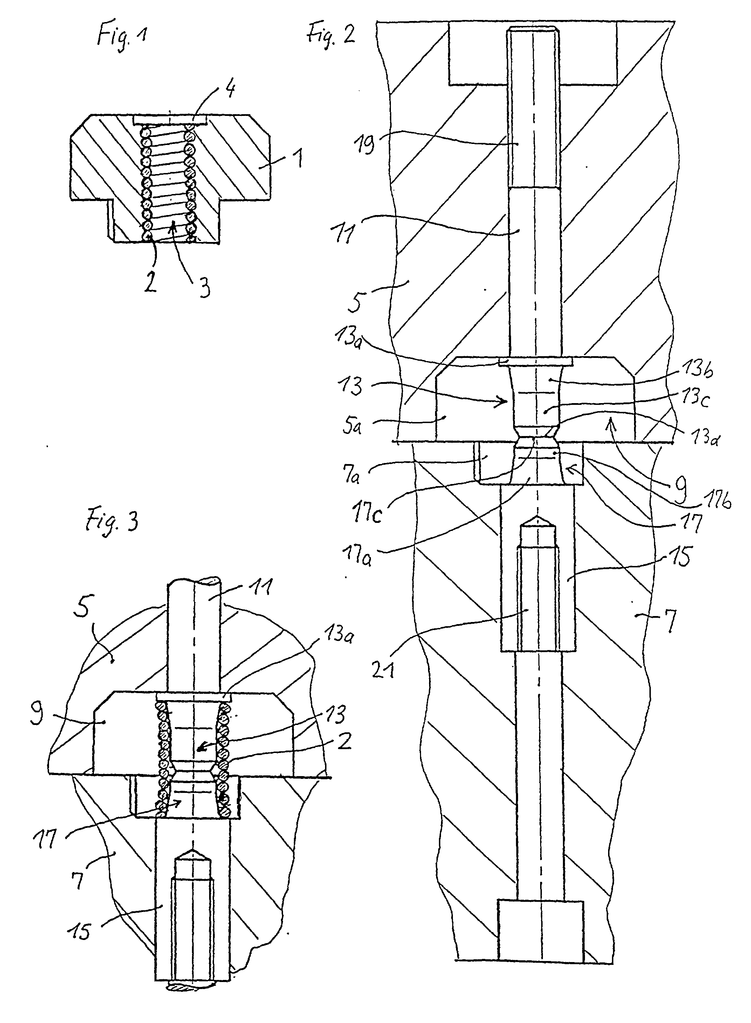

In das in Fig. 1 dargestellte Gußteil 1 ist beim Gießen eine lückenlos gewickelte Drahtwendel eingebettet worden, bei der es sich vorzugsweise um eine Schraubenfeder aus Federstahl mit rundem Drahtquerschnitt handelt. Da zwischen den Windungen der Drahtwendel 2 keine Lücken vorhanden sind, ist der Gießwerkstoff nicht in das Innere der Drahtwendel 2 eingedrungen, so daß hier ein Loch 3 verblieben ist. Die Windungen der Drahtwendel 2 liegen somit an ihrer Innenfläche frei und bilden ein Innengewinde des Loches 3, so daß das Loch 3 ein Gewindeloch ist, in welches eine Schraube eingeschraubt werden kann. An einem Ende hat das Loch 3 eine flachzylindrische Ansenkung 4, die ebenfalls beim Gießen miteingeformt worden ist.

Das Gußteil 1 kann aus beliebigem gießfähigem Werkstoff durch ein beliebiges Gießverfahren hergestellt worden sein. Vorzugsweise handelt es sich um ein aus Zinklegierung durch Druckguß hergestelltes Teil. Es kann sich aber auch um ein Spritzgußteil aus Kunststoff handeln.

Die in Fig. 2 im Schnitt nur im Detail dargestellte Gießvorrichtung hat eine obere Formhälfte 5 und eine untere Formhälfte 7, die jeweils eine Formkavität 5a, 7a aufweisen. Wenn die Formhälften 5, 7 durch einen geeigneten Schließmechanismus (nicht dargestellt) gegeneinander gedrückt werden, ergänzen sich die Formkavitäten 5a, 7a zu einem Formhohlraum 9, der der gewünschten Form des Gußteils 1 (Fig. 1) entspricht.

In die Wandung der oberen Formhälfte 5 ist ein Stift 11 eingesetzt, der einen in die Formkavität 5a vorspringenden Kopf 13 aufweist. Der Kopf 13 hat angrenzend an die Wandung der Formkavität 5a einen Flansch 13a, daran anschließend einen konischen Abschnitt 13b und daran anschließend einen zylindrischen Abschnitt 13c, der mit einer Fase in die Stirnfläche 13b des Kopfes 13 übergeht. In die Wandung der unteren Formhälfte 7 ist ein Stift 15 eingesetzt, der einen in die Formkavität 7a vorspringenden Kopf 17 trägt. Dieser hat angrenzend an die Wandung der Formkavität 7 einen konischen Abschnitt 17a, an den sich ein zylindrischer Abschnitt 17b anschließt, der mit einer Fase in die Stirnfläche 17c des Kopfes 17 übergeht. Die Länge der beiden Köpfe 13 und 17 ist so bemessen, daß ihre Stirnflächen 13d, 17c bei geschlossener Form aneinander anliegen. Dies ist jedoch nicht erfindungswesentlich.

Die beiden Stifte (11, 15) werden durch Gewinde 19 bzw. 21 an den beiden Formhälften 5, 7 fixiert und positioniert.

Zur Durchführung eines Gießvorganges wird die in Fig. 2 gezeigte Vorrichtung so hergerichtet, wie in Fig. 3 dargestellt. Die im Gußteil einzugießende Drahtwendel 2 (Schraubenfeder) wird auf den Kopf 13 des Stiftes 11 aufgesteckt. Der Innendurchmesser ist an den Durchmesser des zylindrischen Abschnitts 13c des Kopfes 13 angepaßt. Der konische Abschnitt 13b bewirkt eine geringfügige Aufweitung des oberen Endes der Schraubenfeder, wodurch die Schraubenfeder mit Reibschluß an dem Kopf 13 gehalten wird. Beim Schließen der Formhälften 5, 7 wird der Kopf 17 des unteren Stiftes 15 in das untere Ende der Schraubenfeder eingeführt, bis die Stirnflächen 13d, 17c der beiden Köpfe aneinanderliegen. Hierbei erfolgt durch den konischen Abschnitt 17a auch am unteren Ende der Schraubenfeder eine geringfügige Aufweitung. Wenn die Stirnflächen 13d, 17c aneinander anliegen, steht die Schraubenfeder unter Vorspannung in Axialrichtung, so daß sichergestellt ist, daß die Windungen der Schraubenfeder lückenlos gegeneinander gedrückt sind.

Anschließend wird der flüssige Werkstoff in den Formhohlraum 9 nach bekannten Methoden (zum Beispiel Druckguß, Spritzguß oder dergleichen), eingeführt und erstarren gelassen, so daß man nach dem Entformen das in Fig. 1 gezeigte Gußstück erhält.

Die konischen Abschnitte 13b und 17a an den Köpfen 13, 17 bewirken, wie erwähnt, eine geringfügige Aufweitung der letzten Windungen an den beiden Enden der Schraubenfeder 2. Hierdurch wird das Einschrauben einer Schraube in das fertige Gußteil erleichtert. Zwischen den konischen Abschnitten 13b, 17a liegt die Schraubenfeder 2 gegen die zyldindrischen Abschnitte 13c, 17b, an und wird von diesen in Axialrichtung gegen etwaige durch das Schrumpfen des Gießwerkstoffs verursachte Kräfte abgestützt.

Außerdem gewährleistet die Einspannung der Drahtwendel 2 zwischen den konischen Abschnitten 13b und 17a, daß kein flüssiger Werkstoff zwischen die Drahtwendel und den Kopf 13 bzw. 17 eindringen kann, d.h., jegliche Bildung eines Gießbartes wird vermieden. Der Flansch 13a des oberen Kopfes 13 dient zur Formung der Ansenkung 4 des Gußteils gemäß Fig. 1. Selbstverständlich kann eine solche Ansenkung, falls gewünscht, auch am unteren Ende der Drahtwendel 2 vorgesehen werden.

Die besondere Form der die Drahtwendel 2 (Schraubenfeder) haltenden Köpfe 13, 17 löst das Problem der Schrumpfung des Werkstücks und ermöglicht ein einfaches Abnehmen des Gußteils ohne Hinterlassen eines Gießbartes, d.h., mit einem sauberen Eingang des von der Drahtwendel 2 gebildeten Innengewindes, ohne daß irgendeine Nachbearbeitung erforderlich ist. Durch die hohe Härte und Oberflächenqualität bei Verwendung handelsüblicher Schraubenfedern 2 wird ein sehr sauberes und belastbares Innengewinde erhalten.

## Patentansprüche

1. Verfahren zur Herstellung eines Gußteils mit Gewindeloch, mit den Schritten:
- Anordnen einer lückenlos gewendelten Drahtwendel (2) im Formhohlraum (9) einer Gießform (5, 7), wobei die Drahtwendel (2) von einem in der Wandung der Gießform befestigten, im wesentlichen zylindrischen Haltestift (11, 15) gehalten und zentriert wird,
- Schließen der Gießform (5, 7);
- Durchführen des Gießvorgangs mit Gießmaterial derart, daß die Drahtwendel (2) in dem sie umgebenden Gießmaterial eingebettet wird und der von Gießmaterial freie Innenraum der Drahtwendel (2) das Gewindeloch bildet
**dadurch gekennzeichnet, daß** an mindestens einem Ende der Drahtwendel (2) die letzten Windungen der Drahtwendel durch einen konischen Abschnitt (13b, 17a) des Stiftes (11, 15) aufgeweitet werden.

2. Verfahren nach Anspruch 1, daß die Drahtwendel (2) an ihren beiden Enden mittels je eines in sie eingeführten Stiftes (11, 15) konisch aufgeweitet wird.

3. Verfahren nach Anspruch 1 oder 2, **dadurch gekennzeichnet, daß** die Drahtwendel (2) in Axialrichtung unter Vorspannung gesetzt wird.

4. Vorrichtung zur Durchführung des Verfahrens nach einem der Ansprüche 1 bis 3, mit einer Gießform in einem Formhohlraum (9) und einem in der Wandung der Gießform befestigten Stift (11, 15), der eine in den Formhohlraum vorspringenden Kopf (13, 17) zum Halten und Zentrieren einer auf den Kopf aufgesteckten Drahtwendel (2) aufweist, **dadurch gekennzeichnet , daß** der oder jeder Kopf (13, 17) in seinem der Wandung der Gießform näherliegenden Bereich eine konische Form (13b, 17a) hat, die im Sinne einer Aufweitung der Drahtwendel (2) wirkt.

5. Vorrichtung nach Anspruch 4, **dadurch gekennzeichnet, daß** die Gießform in zwei Formhälften (5, 7) teilbar ist und daß in jeder Formhälfte ein Stift (11, 15) mit einem in den Formhohlraum vorspringenden Kopf (13, 17) befestigt ist.

6. Vorrichtung nach Anspruch 5, **dadurch gekennzeichnet, daß** die Stirnflächen der beiden Köpfe (13, 17) bei geschlossener Form gegeneinander anliegen.

7. Nach dem Verfahren gemäß einem der Ansprüche 1 bis 3 hergestelltes Gußteil mit Gewindeloch, wobei in das Gußteil (1) eine lückenlos gewickelte Drahtwendel (2) (Schraubenfeder) eingegossen ist, die das Loch (3) umgibt und deren an der Lochinnenseite freiliegende Wicklungen das Innengewinde bilden, **dadurch gekennzeichnet, daß** an mindestens einem Ende der Drahtwendel (2) deren letzte Wicklungen derart konisch aufgeweitet sind, daß das Einschrauben einer Schraube in den Eingang des von der Drahtwendel (2) gebildeten Innengewinde des Gußteils erleichtert wird.

## Claims

1. A method for producing a casting with a threaded hole, with the steps of:
- arranging a wire coil (2) wound without gaps in the mould cavity (9) of a mould (5,7), wherein the wire coil (2) is retained and centered by a substantially cylindrical retaining pin (11,15) mounted in the wall of the mould,
- closing the mould (5,7);
- carrying out the casting process with casting material in such a way that the wire coil (2) is embedded in the casting material surrounding it and the interior space of the wire coil (2) free of casting material forms the threaded hole,
**characterised in that** at at least one end of the wire coil (2) the final windings of the wire coil are widened by a conical portion (13b,17a) of the pin (11,15).

2. A method according to Claim 1, **characterised in that** at both of its ends the wire coil (2) is conically widened by means of a respective pin (11,15) inserted therein.

3. A method according to Claim 1 or 2, **characterised in that** the wire coil (2) is placed under preload in the axial direction.

4. An apparatus for carrying out the method according to any one of Claims 1 to 3, with a mould in a mould cavity (9) and a pin (11,15) which is mounted in the wall of the mould and which has a head (13,17) projecting into the mould cavity for retaining and centering a wire coil (2) fitted on the head, **characterised in that** the or each head (13,17) is of conical shape (13b,17a) in its region situated closer to the mould wall, which shape acts for the purpose of widening the wire coil (2).

5. An apparatus according to Claim 4, **characterised in that** the mould can be separated into two mould halves (5,7), and **in that** a pin (11,15) with a head (13,17) projecting into the mould cavity is mounted in each mould half.

6. An apparatus according to Claim 5, **characterised in that** the end faces of the two heads (13,17) are applied against one another when the mould is closed.

7. A casting with a threaded hole produced in accordance with the method according to any one of Claims 1 to 3, wherein a wire coil (2) (helical spring) wound without gaps is cast in the casting (1), which wire coil surrounds the hole (3) and the windings of which exposed on the inside of the hole form the internal thread, **characterised in that** at at least one end of the wire coil (2) its final windings are conically widened so as to facilitate the screwing-in of a screw into the entrance of internal thread of the casting formed by the wire coil (2).

## Revendications

1. Procédé de fabrication d'une pièce coulée avec un trou fileté, aux étapes consistant à:
- disposer un fil hélicoïdal (2) enroulé sans vide dans l'espace creux (9) d'un moule (5, 7}, le fil hélicoïdal (2) étant maintenu et centré par une goupille de maintien (11, 15) sensiblement cylindrique fixée dans la paroi du moule ;
- fermer le moule (5, 7);
- effectuer l'opération de coulée de sorte que le fil hélicoïdal (2) soit incorporé dans le matériau de coulée l'entourant et que l'espace intérieur du fil hélicoïdal (2), exempt de matériau de coulée, constitue le trou fileté,
**caractérisé par le fait que**, au moins à une extrémité du fil hélicoïdal (2), les dernières spires du fil hélicoïdal sont évasées par un segment conique (13b, 17a) de la goupille (11, 15).

2. Procédé selon la revendication 1, **caractérisé par le fait que** le fil hélicoïdal (2) est évasé de manière conique à ses deux extrémités au moyen d'une goupille (11, 15) introduite dans chacune d'elles.

3. Procédé selon la revendication 1 ou 2, **caractérisé par le fait que** le fil hélicoïdal (2) est prétendu dans le sens axial.

4. Dispositif pour la mise en oeuvre du procédé selon l'une des revendications 1 à 3, avec un moule à espace creux (9) et une goupille (11, 15), fixée dans la paroi du moule et présentant une tête (13, 17) s'avançant dans l'espace creux de moule, destinée à maintenir et à centrer un fil hélicoïdal (2) enfoncé sur la tête, **caractérisé par le fait que** la ou chaque tête (13, 17) présente, dans sa partie la plus rapprochée de la paroi du moule, une forme conique (13b, 17a) agissant dans le sens d'un évasement du fil hélicoïdal (2).

5. Dispositif selon la revendication 4, **caractérisé par le fait que** le moule peut être divisé en deux demi-moules (5, 7) et que dans chaque demi-moule est fixée une goupille (11, 15) avec une tête (13, 17) s'avançant dans l'espace creux de moule.

6. Dispositif selon la revendication 5, **caractérisé par le fait que** les faces frontales des deux têtes (13, 17) s'appuient, dans la forme fermée, l'une contre l'autre.

7. Pièce coulée avec un trou fileté fabriquée selon le procédé suivant l'une des revendications 1 à 3, dans le moule (1) étant coulé un fil hélicoïdal (2) (ressort hélicoïdal) enroulé sans vide entourant le trou (3) et dont les spires situées librement sur la face intérieure du trou constituent le filet intérieur, **caractérisée par le fait que**, à au moins une extrémité du fil hélicoïdal (2), les dernières spires de ce dernier sont évasées de manière conique de sorte que le vissage d'une vis dans l'entrée du filet intérieur de la pièce coulée constitué par le fil hélicoïdal (2) est facilité.
